# EUROPEAN PATENT SPECIFICATION

(11) **EP 1 681 490 B1**
(45) Date of publication and mention of the grant of the patent: **23.07.2008**
(21) Application number: 06000678.0
(22) Date of filing: 13.01.2006
(51) Int. Cl.: F16F 9/14, E05D 11/10, E05F 5/00

(54) **Damping system for dampening the rotary movement of a rotatable body and hinge comprising such a system**
Dämpfersystem zum Dämpfen der Rotationsbewegung eines Rotationskörpers und Scharnier mit einem solchen System
Système d'amortissement pour amortir le mouvement rotatif d'un corps en rotation et charnière comprenant un tel système

(30) Priority: 18.01.2005 IT MI20050046
(43) Date of publication of application: 19.07.2006
(73) Proprietor: Agostino Ferrari S.p.A., 24122 Bergamo (IT)
(72) Inventor: Migli, Carlo, 23900 Lecco (IT)
(74) Representative: Bottero, Claudio

(56) References cited:
- EP-A- 0 828 088
- EP-A- 1 350 443
- DE-U1- 20 104 100
- US-A- 3 685 621
- US-A1- 2004 093 693

## Description

The present invention refers to a damping system, in particular to a damping system for dampening the rotary movement of a rotatable body.

This invention also refers to a hinge comprising such a system, which has preferred although not exclusive use for the connection of movable parts to fixed parts in furniture elements.

In many technical fields it is known the need to dampen movements of movable parts such as, for example, doors, hatches, flaps, servo-controlled drawers, commonly present in a large number of everyday items or devices, such as, for example, pieces of furniture, domestic appliances, computer or telecommunication devices. The aforementioned requirement is particularly felt in the cases where movements take place partially or completely under the action of elastic forces. Indeed, in these cases almost inevitably arise sudden releases at the beginning of the stroke of the movable part or impacts at the end thereof. Such sudden releases or impacts, beside being potentially harmful to the pieces of furniture or devices incorporating the movable part, could also be dangerous or unpleasant for users. In order to reduce or eliminate such effects, thus making the stroke of the movable parts more fluid and continuous, damping systems are commonly used.

Known damping systems for these purposes comprise rotary dampers. Rotary dampers carry out their action thanks to the resistance that a high-viscosity fluid offers to the motion of a rotor at least partially immersed in it and operably interacting, directly or through the interposition of motion transmission elements, such as, for example, cogwheels, friction wheels or pinion-rack systems, with the movable part whose movement it is desired to dampen. Such rotary dampers can be easily adapted for dampening rotary movements (for example, opening/closing of a door or hatch), as well as for dampening linear translation movements (for example, opening/closing of a servo-controlled drawer).

The rotary dampers described above carry out their action in both rotating directions of the rotor and therefore for both directions of the movement to be dampened, be it a rotation or a linear translation. In some applications, however, there is a need to dampen the movement in just one direction, in the opposite direction the damping being unnecessary or unwanted. A know technical solution to satisfy this requirement consists of mounting a pinion onto a shaft associated with the rotor of the damper through the operating interposition of a free-wheel mechanism, so that in one rotating direction the pinion, the shaft and, consequently, the rotor are firmly connected with each other in rotation, and therefore the movement is dampened, whereas in the opposite direction the pinion is idle with respect to the shaft and to the rotor, and therefore the movement is free (not dampened).

US 3,685,621 discloses a unidirectional damper for controlling the motion of an actuator, comprising a movable member arranged within a fluid-containing chamber, which together define the damper, and a seat enclosing the chamber. By means of a free-wheel mechanism comprising a plurality of ball and spring devices the chamber is made to rotate freely with respect to the seat in one direction, but not in the other, thus obtaining the dampening action.

DE 201 04 100 U1 discloses a hinge, in particular for pieces of furniture, having an integrated rotary damper arranged with respect to the hinge members so as to carry out the damping action in at least one part of the rotational path of the hinge members.

The purpose of the present invention is to provide a system for dampening rotary movements of rotatable bodies, suitable for carrying out one-directional damping, which is constructively simple and cost-effective compared to those of the prior art.

According to a first aspect thereof, the present invention therefore refers to a damping system for dampening the rotary movement of a rotatable body comprising:
- a rotary damper having a longitudinal axis X-X and comprising a rotor having a central portion suitable for operably interacting with the rotatable body and at least one longitudinal end portion enclosed within a containment casing and immersed in a viscous fluid operably interposed between the at least one longitudinal end portion and the containment casing;
- a seat for the rotary damper at least partially laterally defined by at least one fixed abutment surface, provided at said containment casing enclosing the at least one longitudinal end portion, and by the rotatable body,
which is characterised in that the rotary damper is rotated and translated within the seat by the rotatable body between an operating position, wherein the rotation of the containment casing is substantially prevented by the abutment against the at least one abutment surface in a first rotating direction of the rotatable body, and a non-operating position, wherein the containment casing is free to rotate with respect to the at least one abutment surface in a second rotating direction of the rotatable body opposite to the first rotating direction.

Within the framework of the present description and of the subsequent claims, the term "non-operating position", is used to indicate a position in which the damper does not exert its damping action and the rotary movement of the rotatable body is therefore free and, as such, not significantly braked.

Advantageously, the damping system of the invention allows damping to be carried out in just one rotating direction of the rotatable body in a particularly simple way, since the one-directional nature of the damping is in this case achieved without the use of additional transmission devices, such as pinions associated with the rotor through free-wheel mechanisms, but just by suitably arranging the seat of the rotary damper and exploiting the action of the rotatable body itself.

Indeed, the rotation of the rotatable body in a first direction, in which damping is desired, takes the rotary damper into an operating position, wherein it is substantially wedged between the fixed abutment surface and the rotatable body itself. In this position the containment casing is substantially firmly linked, due to friction, with the abutment surface, for which reason the rotation thereof is substantially prevented; at the same time, however, the rotation of the rotatable body can still take place, dampened as desired, thanks to the relative rotation between the rotor immersed in the viscous fluid within the containment casing and the containment casing itself. The rotation of the rotatable body in the opposite direction, on the other hand, takes the rotary damper into a non-operating position, in which it is free to rotate in the seat thereof. In this position the containment casing does not interfere with the abutment surface and the damper is dragged, as a single body, by the rotation of the rotatable body, which therefore does not undergo any damping, in this case there being no substantial relative rotation between the rotor immersed in the viscous fluid and the containment casing.

The absence of additional devices for making the action of the rotary damper one-directional advantageously allows, in addition to the previously highlighted structural and operating simplification of the damping system object of the invention, a reduction of the overall size and of the manufacturing costs thereof.

According to a second aspect thereof, the present invention refers to a hinge comprising a movable element and a fixed element connected through a kinematic system comprising at least one rotatable body, which is characterised in that it comprises a damping system as defined above, provided in the hinge for operably interacting with said at least one rotatable body.

According to a third aspect thereof, the present invention refers to a piece of furniture comprising a hinge of the aforementioned type.

Of course, the above-described advantageous characteristics of the damping system of the present invention define as many advantageous characteristics of the hinge comprising such a system and of the piece of furniture wherein the hinge can be mounted, said hinge and piece of furniture therefore being structurally and functionally simpler and having a lower cost.

Further characteristics and advantages of the invention shall become clearer from the following description of some preferred embodiments thereof, made hereafter, for indicating and not limiting purposes, with reference to the attached drawings. In such drawings:
- figure 1 represents a schematic perspective view of a damping system according to the invention;
- figure 2 represents a schematic top view of the damping system of figure 1;
- figure 3 represents a front partially sectional view of the rotary damper of the damping system of figure 1;
- figure 4 represents a front view of the rotor of the rotary damper of figure 3;
- figure 4a represents a plan view of the rotor of figure 4;
- figure 5 represents a front view of the rotary damper of figure 3 according to an alternative embodiment of the invention;
- figure 5a represents a plan view of the rotary damper of figure 5;
- figure 6 represents a front view of the rotor of the rotary damper of figure 3 according to a further alternative embodiment of the invention;
- figure 6a represents a plan view of the rotor of figure 6;
- figure 7 represents a plan partially sectional view of a hinge according to the invention in a first operating configuration thereof;
- figure 8 represents a plan partially sectional view of the hinge of figure 7 in a second operating configuration.

In such figures, a damping system suitable for dampening the rotary motion of a rotatable body 11 according to the invention is generally indicated at 100.

The damping system 100 essentially comprises a rotary damper 1 housed in a seat 10.

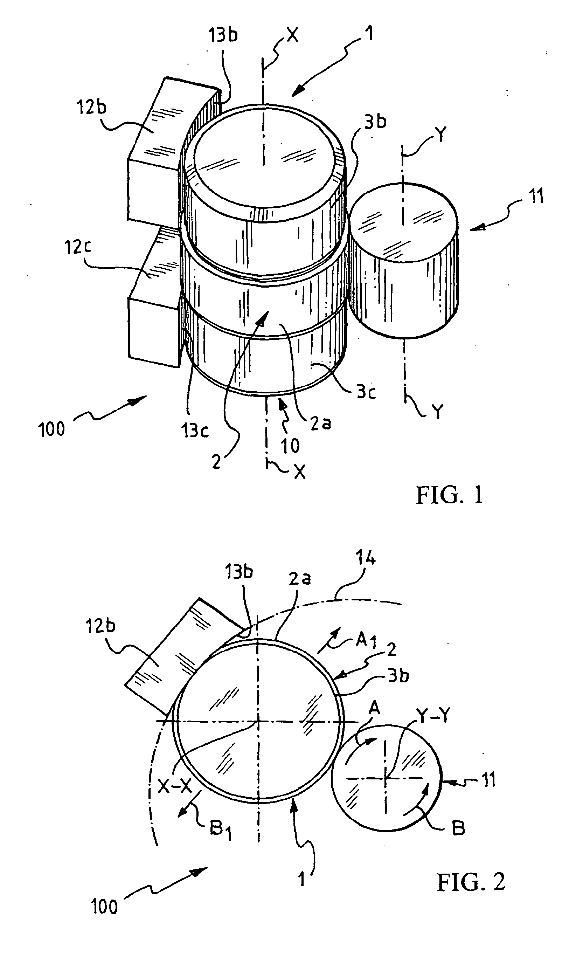

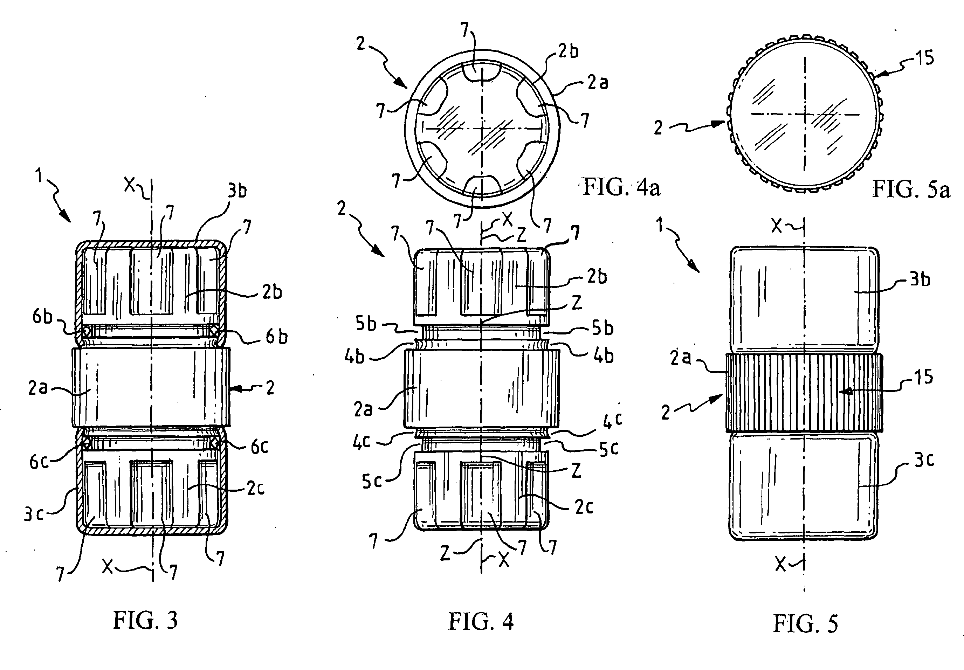

As shown in figure 1 and in greater detail in figure 3, the rotary damper 1 has a longitudinal axis X-X and comprises a rotor 2, having a central portion 2a and two longitudinal end portions 2b, 2c. At least one of the longitudinal end portions 2b o 2c, and preferably both of such portions in order to increase the damping capability for the same overall size of the rotary damper 1, is enclosed in a containment casing 3b or 3c and is immersed in a viscous fluid operably interposed between such a longitudinal end portion 2b or 2c and the respective containment casing 3b or 3c.

The seat 10 is at least partially laterally defined by the rotatable body 11 and, in the preferred embodiment illustrated here, by at least two abutments 12b, 12c comprising respective fixed abutment surfaces 13b, 13c facing the rotary damper 1 at the longitudinal end portions 2b, 2c of rotor 2 enclosed in the respective containment casings 3b, 3c. As can be seen in figures 1 and 2, the seat 10 is defined so that the rotatable body 11 and the rotary damper 1 are in contact and can operably interact at the central portion 2a of the rotor 2. In such figures the rotatable body 11 is schematically represented as a cylinder having a rotation axis Y-Y, but it is clear that it can take a plurality of different shapes according to the context wherein the damping system 100 is applied. Preferably, however, the rotatable body 11 shall always comprise at least one substantially curvilinear side surface portion suitable for operably interacting with the central portion 2a of the rotor 2. The abutments 12b, 12c with respective abutment surfaces 13b, 13c are longitudinally spaced apart so as not to interfere with the central portion 2a of the rotor 2.

The structure of the rotary damper 1 is illustrated in detail in figures 3 and 4.

In a preferred embodiment of the invention the rotor 2 is substantially cylindrical. Preferably, moreover, the diameter of the central portion 2a is larger than the diameter of the longitudinal end portions 2b, 2c, to allow the operating interaction with the rotatable body 11 without the latter interfering with the containment casings 3b, 3c associated with the aforementioned longitudinal end portions and preferably consisting of hollow cylindrical bodies, open at a base.

The containment casings 3b, 3c are associated, for example through riveting of the respective free ends, with the rotor 2 at a first pair of circumferential grooves 4b, 4c, formed on the rotor 2 at axially opposite sides with respect to the central portion 2a, so as to allow a free rotation between the rotor 2 and the casings themselves. A second pair of circumferential grooves 5b, 5c, arranged between the grooves 4b, 4c and the longitudinal end portions 2b, 2c, is suitable for housing respective sealing gaskets 6b, 6c of the conventional type, for avoiding leakage of the viscous fluid.

In order to increase the amount of viscous fluid that it is possible to interpose between the containment casings 3b, 3c and the longitudinal end portions 2b, 2c, and, consequently, the resisting torque acting on the rotor 2, the longitudinal end portions 2b, 2c preferably comprise a plurality of slots 7 formed laterally in each of said portions.

Figures 4, 4a show an embodiment of the invention wherein the slots 7 have a longitudinal axis Z-Z preferably substantially parallel to the longitudinal axis X-X of the rotary damper 1, i.e. they are substantially longitudinal.

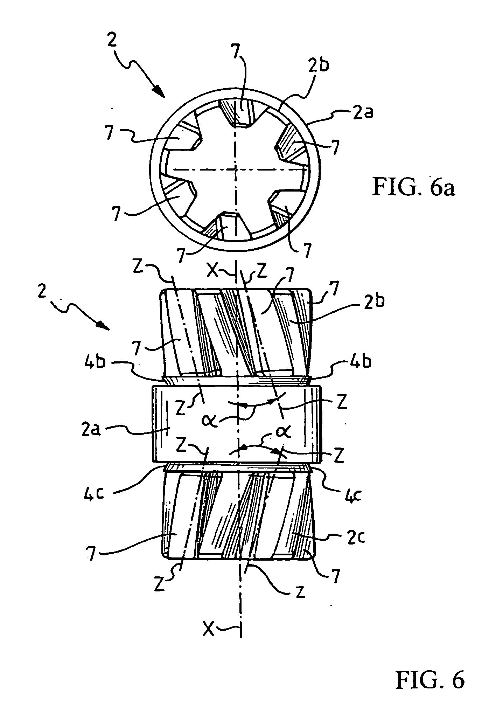

Figures 6, 6a show another embodiment of the invention, wherein the slots 7 have a longitudinal axis Z-Z forming a slant angle α, of a predetermined value with respect to the longitudinal axis X-X of the rotary damper 1. The slant direction of the longitudinal axis Z-Z of the slots 7 with respect to the longitudinal axis X-X at both of the longitudinal end portions 2b, 2c is determined based upon the rotating direction of the rotary damper 1 in which it is operative, i.e. in which there is a relative rotation between the rotor 2 and the containment casings 3b, 3c. In particular, such a slant direction is selected so that, when the rotor 2 rotates with respect to the containment casings 3b, 3c, the viscous fluid interposed between them and the longitudinal end portions 2b, 2c of the rotor 2 is naturally pushed towards the closed ends of such casings, i.e. away from the central portion 2a, where they are associated with the rotor 2. In such a way it is advantageously possible to ensure a seal for the viscous fluid at the grooves 4b, 4c when the rotary damper 1 is operative even without employing sealing gaskets 6b, 6c (in static conditions, i.e. when the rotary damper 1 is inoperative, the seal is ensured by the high viscosity of the fluid). In this embodiment it is therefore possible to eliminate the grooves 5b, 5c, thus increasing the extension of the longitudinal end portions 2b, 2c active in the damping.

Preferably, the slant angle α is between about 30° and about 87°. The Applicant has experimentally found out that outside such a range either the damping action is excessively low (for α, < 30°) or the pushing effect on the viscous fluid becomes negligible (for α, > 87°). More preferably, the slant angle α, is between about 75° and about 82°.

In a preferred embodiment of the invention the central portion 2a of the rotor 2 has a substantially smooth lateral surface (figures 1, 3, 4, 4a, 6, 6a). In an alternative embodiment such lateral surface at least partially comprises a plurality of longitudinal knurlings 15 (figures 5, 5a), for advantageously increasing the dragging action of the rotary damper 1 on the rotatable body 11.

The viscous fluid operably interposed between the containment casings 3b, 3c and the longitudinal end portions 2b, 2c of the rotor 2 has a kinematic viscosity at 20°C preferably between about 0.01 m²/s and about 3.5 m²/s, more preferably between about 1 m²/s and 2.5 m²/s.

Preferably, moreover, the aforementioned viscous fluid comprises at least one silicon compound. Such compounds, known to those skilled in the art and commercially available, have the high viscosity required for application in the present invention.

In a preferred embodiment of the invention, the rotatable body 11 has a rotation axis Y-Y substantially parallel to the longitudinal axis X-X of the rotary damper 1. Preferably, also the abutment surfaces 13b, 13c are substantially parallel to the longitudinal axis X-X of the rotary damper 1. This arrangement allows the surface contact between the rotatable body 11 and the rotary damper 1 at the central portion 2a, and between the abutment surfaces 13b, 13c and the rotary damper 1 at the containment casings 3b, 3c to be improved.

Preferably, the abutment surfaces 13b, 13c are concave and, more preferably, comprise at least' one sector of a cylindrical surface 14 eccentric with respect to the rotation axis Y-Y of the rotatable body 11. This configuration is particularly advantageous to allow an effective passage of the rotary damper 1 from the operating position, wherein it is substantially wedged between the abutment surfaces 13b, 13c and the rotatable body 11, and the non-operating position, wherein it is free to rotate as a whole in the seat 10.

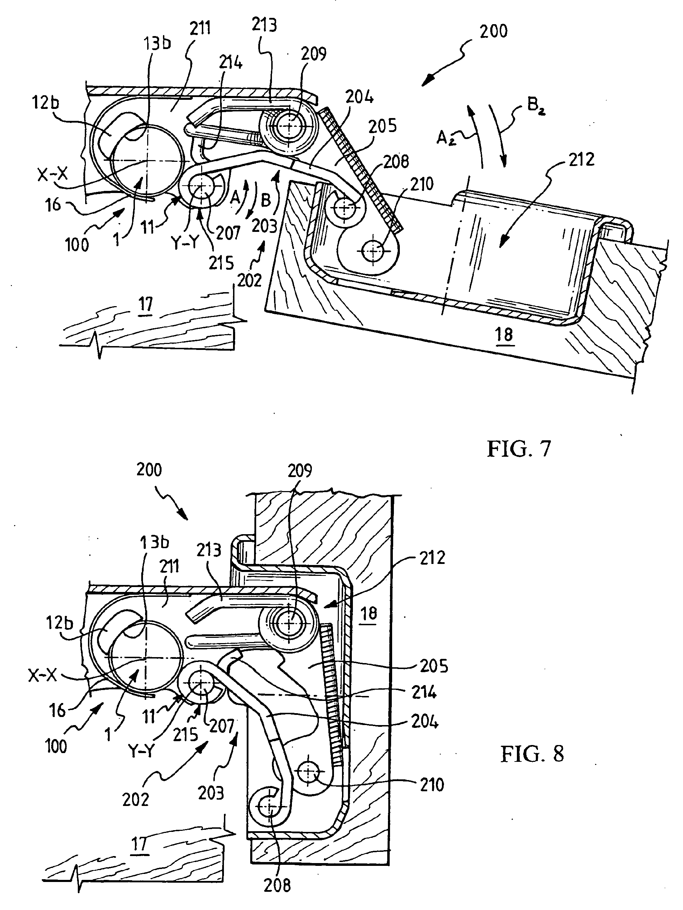

Preferably, the damping system 100 also comprises elastic means suitable for holding the rotary damper 1 in the seat 10. Such elastic means can, for example, comprise a flat spring 16, as shown in figures 6 and 7, or other devices in any case of the conventional type. The aforementioned elastic means have the sole purpose of avoiding the rotary damper 1, not otherwise constrained, coming out from the seat 10 both during the operation of the damping system 100 and at rest, for example due to gravity, in some assembly conditions.

With reference to figures 1 and 2 the operation of the damping system 100 shall now be described in greater detail. The rotatable body 11 can rotate in a first rotating direction, indicated by the arrow A, and in an opposite rotating direction, indicated by the arrow B. With the relative arrangement of the abutment surfaces 13b, 13c, of the rotary damper 1 and of the rotatable body 11 shown in such figures, the rotation of the rotatable body is dampened in the rotating direction A, whereas it is free in the opposite rotating direction B.

In the first case (rotating direction A), the rotatable body 11 drags the rotary damper 1, with whom it is in sliding contact at the central portion 2a of the rotor 2, in the direction in which the space between the rotary damper 1 and the abutment surfaces 13b, 13c decreases, indicated by arrow A₁, taking it into an operating position. Initially, due to the rotation of the rotatable body 11, the rotary damper 1 rotates and translates until it is in the operating position, in which the rotation of the containment casings 3b, 3c is substantially prevented by the abutment against the abutment surfaces 13b, 13c. In this operating condition in which the rotary damper 1 is substantially wedged between the rotatable body 11 and the abutment surfaces 13b, 13c, only the relative rotation of the rotor 2 with respect to the containment casings 3b, 3c is permitted. The viscous fluid operably interposed between the containment casings 3b, 3c and the longitudinal end portions 2b, 2c of the rotor generates a braking torque on the rotor 2 and, consequently, the rotation of the rotatable body 11 is dampened.

In the second case (rotating direction B) the rotatable body 11 drags the rotary damper 1 in the direction in which the space between the rotary damper 1 and the abutment surfaces 13b, 13c increases, indicated by arrow B₁, taking it in a non-operating position. Initially, the rotation of the rotatable body 11 determines an unwedging of the rotary damper 1; thereafter, when the containment casings 3b, 3c are no longer interfering with the abutment surface 13b, 13c, the rotary damper 1 is able to freely rotate as a single body without exerting any substantial damping action, thus the rotation of the rotatable body 11 is free.

According to a further aspect of the invention and with reference to figures 7 and 8, a hinge 200 shall now be described comprising the damping system 100 discussed above. In such figures elements structurally or functionally equivalent to those represented in figures 1-6 are indicated with the same reference numeral and shall not be described any further.

The hinge 200 comprises a movable element 212, in this case having the form of a box-shaped body, and a fixed element 211, in this case having the form of a support wing, connected through a kinematic system 202 comprising at least one rotatable body 11. According to the invention, the hinge 200 also comprises a damping system 100 of the aforementioned type, provided in the hinge 200 for operably interacting with the rotatable body 11.

The kinematic system 202 may comprise a single pin (single-pin hinges) or many pins (for example, articulated quadrilateral hinges or double articulated quadrilateral hinges). In the preferred embodiment illustrated here, the kinematic system 202 comprises an articulated quadrilateral 203, including a first connecting rod 204 and a second connecting rod 205, which are hinged through four pin elements 207, 208, 209, 210 to the fixed element 211 and to the movable element 212. The damping system 100 is provided for operably interacting with the articulated quadrilateral 203 at a hinging portion 215 of the connecting rod 204 with the fixed element 211. Such a hinging portion 215, having the form of a substantially circular eyelet, defines the rotatable body 11, movable in rotation about the pin 207.

The hinge 200 further comprises a spring 213 mounted on the pin 209 and acting on a peg 214 defined on the connecting rod 204, so as to ensure the automatic closing of the movable element 212 when it is left free.

The application of the damping system 100 to the articulated quadrilateral 203 according to what has just been outlined allows the thrust of the spring 213 during the closing of the movable element 212 to be effectively dampened. Indeed, as known to those skilled in the art, the specific configuration of the articulated quadrilateral 203 allows a ratio between the rotation angle of the connecting rod 204 and the rotation angle of the movable element 212 to be obtained that has a maximum (about 1) close to the closed configuration of the movable element 212 (figure 8), and substantially decreases to about zero as the movable element 212 rotates towards the open configuration (figure 7).

In the preferred embodiment here illustrated, the rotary damper 1 of the damping system 100 operably interacts with the hinging portion 215 directly. In an alternative embodiment, not shown, between the rotary damper 1 and the hinging portion 215 at least one intermediate element can be provided, in any case firmly associated with the connecting rod 204 and having at least partially a cylindrical lateral surface concentric with the axis Y-Y of the pin 207. The abutments 12b, 12c presenting the abutment surfaces 13b, 13c (of which just the abutment 12b and the respective abutment surface 13b can be seen in figures 7 and 8) are in any case integral with the fixed element 211.

When the movable element 212 is opened (arrow B₂ in figure 7) the hinging portion 215 rotates in the direction of arrow A and carries the rotary damper 1 in the non-operating position thereof. The opening of the movable element 212 thus takes place without damping. Once released, the movable element 212 tends to close (arrow A₂ in figure 7) under the action of the spring 213, making the hinging portion 215 rotate in the direction of the arrow B. The rotation in this direction determines the displacement of the rotary damper 1 into its operating position and, consequently, the damping, according to the mechanism outlined above with reference to the operation of the damping system 100, of the closing movement of the movable element, as desired.

The hinge 200 has a preferred although not exclusive use in pieces of furniture, such as, for example, furniture with doors or with flaps, to join movable parts, for example a door or a flap, to fixed parts, such as walls of the aforementioned pieces of furniture. Thus, the hinge 200 can be installed in a piece of furniture, only partially and schematically illustrated in figures 7 and 8, comprising a fixed part 17, wherein the fixed element 211 of the hinge 200 is mounted, and a movable part, for example a closing door 18, associated with the movable element 212 of the hinge 200.

Obviously, a man skilled in the art may introduce further variants and modifications in the above described damping system and hinge, in order to satisfy specific and contingent requirements, which variants and modifications fall anyhow within the scope of protection as defined by the appended claims.

## Claims

1. Damping system (100) for dampening the rotary movement of a rotatable body (11) comprising:
- a rotary damper (1) having a longitudinal axis X-X and comprising a rotor (2) having a central portion (2a) suitable for operably interacting with said rotatable body (11) and at least one longitudinal end portion (2b,2c) enclosed within a containment casing (3b,3c) and immersed in a viscous fluid operably interposed between said at least one longitudinal end portion (2b,2c) and said containment casing (3b,3c);
- a seat (10) for said rotary damper (1) at least partially laterally defined by at least one fixed abutment surface (13b,13c), provided at said containment casing (3b,3c) enclosing the at least one longitudinal end portion (2b, 2c), and by said rotatable body (11),
**characterised in that** said rotary damper (1) is rotated and translated within said seat (10) by said rotatable body (11) between an operating position, wherein the rotation of said containment casing (3b,3c) is substantially prevented by the abutment against said at least one abutment surface (13b,13c) in a first rotating direction (A) of the rotatable body (11), and a non-operating position, wherein said containment casing (3b,3c) is free to rotate with respect to said at least one abutment surface (13b,13c) in a second rotating direction (B) of the rotatable body (11) opposite said first rotating direction (A).

2. Damping system (100) according to claim 1, wherein said rotor (2) comprises two end portions (2b,2c) enclosed in respective containment casings (3b,3c) and immersed in a viscous fluid operably interposed between said longitudinal end portions (2b,2c) and said containment casings (3b,3c).

3. Damping system (100) according to claim 2, comprising at least two abutment surfaces (13b,13c) defined in said seat (10) at both of said longitudinal end portions (2b,2c) of said rotor (2).

4. Damping system (100) according to any one of the previous claims, wherein said rotor (2) is substantially cylindrical.

5. Damping system (100) according to claim 1 or 2, wherein said longitudinal end portions (2b,2c) of said rotor (2) comprise a plurality of slots (7).

6. Damping system (100) according to claim 5, wherein said slots (7) have a longitudinal axis Z-Z substantially parallel to the longitudinal axis X-X of said rotary damper (1).

7. Damping system (100) according to claim 5, wherein said slots (7) have a longitudinal axis Z-Z forming a slant angle α of a predetermined value with respect to the longitudinal axis X-X of said rotary damper (1).

8. Damping system (100) according to claim 7, wherein said slant angle α is comprised between about 30° and about 87°.

9. Damping system (100) according to claim 8, wherein said slant angle α is comprised between about 75° and about 82°.

10. Damping system (100) according to claim 4, wherein said central portion (2a) of said rotor (2) has a diameter larger than the diameter of said longitudinal end portions (2b,2c).

11. Damping system (100) according to any one of the previous claims, wherein said central portion (2a) of said rotor (2) comprises a plurality of longitudinal knurlings (15) at the lateral surface thereof.

12. Damping system (100) according to any one of the previous claims, wherein said viscous fluid has a kinematic viscosity at 20°C comprised between about 0.01 m²/s and about 3.5 m²/s.

13. Damping system (100) according to claim 12, wherein said viscous fluid has a kinematic viscosity at 20°C comprised between about 1 m²/s and about 2.5 m²/s.

14. Damping system (100) according to any one of the previous claims, wherein said viscous fluid comprises at least one silicon compound.

15. Damping system (100) according to any one of the previous claims, wherein said rotatable body (11) has a rotation axis Y-Y substantially parallel to the longitudinal axis X-X of said rotary damper (1).

16. Damping system (100) according to any one of the previous claims wherein said at least one abutment surface (13b,13c) is substantially parallel to the longitudinal axis X-X of said rotary damper (1).

17. Damping system (100) according to any one of the previous claims, wherein said at least one abutment surface (13b,13c) is concave.

18. Damping system (100) according to claim 17, wherein said at least one abutment surface (13b,13c) comprises at least one sector of cylindrical surface (14) eccentric with respect to said rotation axis Y-Y of said rotatable body (11).

19. Damping system (100) according to any one of the previous claims comprising elastic means (16) suitable for holding said rotary damper (1) in said seat (10).

20. Hinge (200) comprising a movable element (212) and a fixed element (211) connected through a kinematic system (202) comprising at least one rotatable body (11), **characterised in that** it comprises a damping system (100) according to any one of the previous claims provided for operably interacting with said at least one rotatable body (11).

21. Hinge (200) according to claim 20, wherein said kinematic system (202) comprises an articulated quadrilateral (203) and said rotatable body (11) is at least partially defined by a hinging end (215) of a connecting rod (204) of said articulated quadrilateral (203) at said fixed element (211).

22. Piece of furniture comprising a hinge (200) according to claim 20 or 21.

## Patentansprüche

1. Dämpfersystem (100) zum Dämpfen der Rotationsbewegung eines Rotationskörpers (11), umfassend
- einen Rotationsdämpfer (1) mit einer Längsachse X-X und einem Rotor (2), der einen zentralen Teil (2a) zum Zusammenwirken mit dem Rotationskörper (11) und mindestens einen Längsendteil (2b, 2c) aufweist, welcher in einem Aufnahmegehäuse (3b, 3c) eingeschlossen und in einem viskosen Fluid eingetaucht ist, das wirkungsmäßig zwischen dem mindestens einen Endteil (2b, 2c) und dem Aufnahmegehäuse (3b, 3c) vorgesehen ist,
- einen Sitz (10) für den Rotationsdämpfer (1), der mindestens teilweise seitlich durch mindestens eine fixierte Anschlagfläche (13b, 13c) definiert ist, welche an dem Aufnahmegehäuse (3b, 3c), das das mindestens eine Endteil (2b, 2c) einschließt, sowie von dem Rotationskörper (11) gebildet ist,
**dadurch gekennzeichnet, dass** der Rotationsdämpfer in dem Sitz (10) von dem Rotationskörper (11) rotatorisch und translatorisch zwischen einer Betriebsposition, in welcher eine Rotation des Aufnahmegehäuses (3b, 3c) im wesentlichen durch Anlaufen an der mindestens einen Anschlagfläche (13b, 13c) in einer ersten Drehrichtung (A) des Rotationskörpers (11) verhindert ist, und einer Ruheposition bewegt wird, in welcher das Aufnahmegehäuse (3b, 3c) frei zu einer Drehung bezüglich der mindestens einen Anschlagfläche (13b, 13c) in einer zweiten Rotationsrichtung (B) des Rotationskörpers (11) entgegengesetzt zur ersten Drehrichtung (A) ist.

2. Dämpfersystem (100) nach Anspruch 1, bei dem der Rotor (2) zwei Endteile (2b, 2c) aufweist, die in entsprechenden Aufnahmegehäusen (3b, 3c) aufgenommen und in einem viskosen Fluid eingetaucht sind, das sich zwischen den Längsendteilen (2b, 2c) und den Aufnahmegehäusen (3b, 3c) befindet.

3. Dämpfersystem (100) nach Anspruch 2, umfassend mindestens zwei Anschlagflächen (13b, 13c), die in dem Sitz (10) an beiden Längsendteilen (2b, 2c) des Rotors (2) vorsehen sind.

4. Dämpfersystem (100) nach einem der vorangehenden Ansprüche, bei dem der Rotor (2) im wesentlichen zylindrisch ist.

5. Dämpfersystem (100) nach Anspruch 1 oder 2, bei dem die Längsendteile (2b, 2c) des Rotors (2) mehrere Schlitze (7) umfassen.

6. Dämpfersystem (100) nach Anspruch 5, bei dem die Schlitze (7) eine Längsachse Z-Z haben, die im wesentlichen parallel zur Längsachse X-X des Rotationsdämpfers (11) verläuft.

7. Dämpfersystem (100) nach Anspruch 5, bei dem die Schlitze (7) eine Längsachse Z-Z haben, die einen Schrägungswinkel α vorbestimmter Größe bezüglich der Längsachse X-X des Rotationsdämpfers (1) bildet.

8. Dämpfersystem (100) nach Anspruch 7, bei dem der Schrägungswinkel α zwischen etwa 30° und etwa 87° liegt.

9. Dämpfersystem (100) nach Anspruch 8, bei dem der Schrägungswinkel α zwischen 75° und 82° liegt.

10. Dämpfersystem (100) nach Anspruch 4, bei dem der zentrale Teil (2a) des Rotors (2) einen Durchmesser hat, der größer als der Durchmesser der Längsendteile (2b, 2c) ist.

11. Dämpfersystem (100) nach einem der vorangehenden Ansprüche, bei dem der zentrale Teil (2a) des Rotors (2) mehrere längs verlaufende Riffelungen (15) an seiner Seitenfläche aufweist.

12. Dämpfersystem (100) nach einem der vorangehenden Ansprüche, bei dem das viskose Fluid eine kinematische Viskosität bei 20°C zwischen etwa 0,01m²/s und etwa 3,5 m²/s aufweist.

13. Dämpfersystem (100) nach Anspruch 12, bei dem das viskose Fluid eine kinematische Viskosität bei 20 °C zwischen etwa 1 m²/s und etwa 2,5 m²/s aufweist.

14. Dämpfersystem (100) nach einem der vorangehenden Ansprüche, bei dem das viskose Fluid mindestens ein Silizium-Kompound umfasst.

15. Dämpfersystem (100) nach einem der vorangehenden Ansprüche, bei dem der Rotationskörper (11) eine Rotationsachse Y-Y hat, die im wesentlichen parallel zur Längsachse X-X des Rotationsdämpfers (1) verläuft.

16. Dämpfersystem (100) nach einem der vorangehenden Ansprüche, bei dem die mindestens eine Anschlagfläche (13b, 13c) im wesentlichen parallel zur Längsachse X-X des Rotationsdämpfers (1) liegt.

17. Dämpfersystem (100) nach einem der vorangehenden Ansprüche, bei dem mindestens eine Anschlagfläche (13b, 13c) konkav ist.

18. Dämpfersystem (100) nach Anspruch 17, bei dem mindestens eine Anschlagfläche (13b, 13c) mindestens einen Sektor einer Zylinderfläche (14) hat, die exzentrisch bezüglich der Rotationsachse Y-Y des Rotationskörpers (11) ist.

19. Dämpfersystem (100) nach einem der vorangehenden Ansprüche, umfassend eine elastische Vorrichtung (16), die dazu eingerichtet ist, den Rotationsdämpfer (1) in dem Sitz (10) zu halten.

20. Scharnier (200) umfassend ein bewegliches Element (212) und ein feststehendes Element (211), die über ein kinematisches System (202) verbunden sind, welches mindestens einen Rotationskörper (11) umfasst, **dadurch gekennzeichnet, dass** es ein Dämpfersystem (100) nach einem der vorangehenden Ansprüche umfasst, welches zum Zusammenwirken mit dem mindestens einen Rotationskörper (11) bestimmt ist.

21. Scharnier (200) nach Anspruch 20, bei dem das kinematische System (202) mindestens eine Vierseitgelenk (203) umfasst und der Rotationskörper (11) mindestens teilweise von einem Scharnierende (215) einer Verbindungsstange (204) des Vierseitgelenkes (203) an dem feststehenden Element (211) gebildet ist.

22. Möbelstück umfassend ein Scharnier (200) gemäß Anspruch 20 oder 21.

## Revendications

1. Système d'amortissement (100) pour amortir le mouvement rotatif d'un corps en rotation (11) comprenant :
- un amortisseur rotatif (1) ayant un axe longitudinal X-X et comprenant un rotor (2) ayant une région centrale (2a) pour interagir en fonctionnement avec ledit corps en rotation (11) et au moins une région d'extrémité longitudinale (2b, 2c) enfermée dans un boîtier de confinement (3b, 3c) et immergé dans un fluide visqueux interposé en fonctionnement entre ladite au moins région d'extrémité longitudinale (2b, 2c) et ledit boîtier de confinement (3b, 3c);
un siège (10) pour ledit amortisseur rotatif (1) délimité latéralement au moins en partie par au moins une surface de butée (13b, 13c) fixe, prévue sur ledit boîtier de confinement (3b, 3c) enfermant ladite au moins une région d'extrémité longitudinale (2b, 2c), et par ledit corps en rotation (11), **caractérisé en ce que** ledit amortisseur rotatif (1) est pivoté et translaté avec ledit siège (10) par ledit corps en rotation (11) entre une position de fonctionnement, dans laquelle la rotation dudit boîtier de confinement (3b, 3c) est sensiblement empêcher par la butée contre ladite au moins une surface de butée (13b, 13c) dans une première direction de rotation (A) du corps en rotation (11), et une position de non fonctionnement, dans laquelle ledit boîtier de confinement (3b, 3c) est libre de pivoter par rapport à ladite au moins une surface de butée (13b, 13c) dans une seconde direction de rotation (B) du corps en rotation (11) opposée à ladite première direction de rotation (A).

2. Système d'amortissement (100) selon la revendication 1, **caractérisé en ce que** ledit rotor (2) comprend deux régions d'extrémités (2b, 2c) enfermées dans des boîtiers de confinement respectifs (3b, 3c) et immergées dans un fluide visqueux interposé en fonctionnement entre lesdites régions d'extrémités (2b, 2c) et lesdits boîtiers de confinement (3b, 3c).

3. Système d'amortissement (100) selon la revendication 2, comprenant au moins deux surfaces de butées (13b, 13c) définies à chacune desdites régions d'extrémité longitudinales dudit rotor (2).

4. Système d'amortissement (100) selon l'une quelconque des revendications précédentes, **caractérisé en ce que** ledit rotor (2) est sensiblement cylindrique.

5. Système d'amortissement (100) selon la revendication 1 ou 2, **caractérisé en ce que** lesdites régions d'extrémité (2b, 2c) dudit rotor (2) comprend plusieurs rainures (7).

6. Système d'amortissement (100) selon la revendication 5, **caractérisé en ce que** les rainures (7) ont un axe longitudinal Z-Z sensiblement parallèle à l'axe longitudinal X-X dudit amortisseur rotatif (1).

7. Système d'amortissement (100) selon la revendication 5, **caractérisé en ce que** les rainures (7) ont un axe longitudinal Z-Z formant un angle d'inclinaison α d'une valeur prédéterminée par rapport à l'axe longitudinal X-X dudit amortisseur rotatif (1).

8. Système d'amortissement (100) selon la revendication 7, **caractérisé en ce que** ledit angle d'inclinaison α est compris entre environ 30° et environ 87°.

9. Système d'amortissement (100) selon la revendication 8, **caractérisé en ce que** ledit angle d'inclinaison α est compris entre environ 75° et environ 82°.

10. Système d'amortissement (100) selon la revendication 4, **caractérisé en ce que** la région centrale (2a) dudit rotor (2) a un diamètre supérieur au diamètre desdites régions d'extrémités longitudinales (2b, 2c).

11. Système d'amortissement (100) selon l'une quelconque des revendications précédentes, **caractérisé en ce que** ladite région centrale (2a) dudit rotor (2) comprend plusieurs moletages longitudinaux (15) à sa surface latérale.

12. Système d'amortissement (100) selon l'une quelconque des revendications précédentes, **caractérisé en ce que** le fluide visqueux a une viscosité cinématique à 20°C comprise entre environ 0,01 m²/s et environ 3,5 m²/s.

13. Système d'amortissement (100) selon la revendication 12, **caractérisé en ce que** ledit fluide visqueux a une viscosité cinématique à 20°C comprise entre environ 1 m²/s et environ 2,5 m²/s.

14. Système d'amortissement (100) selon l'une quelconque des revendications précédentes, **caractérisé en ce que** ledit fluide visqueux comprend au moins un composé de silicone.

15. Système d'amortissement (100) selon l'une quelconque des revendications précédentes, **caractérisé en ce que** ledit corps en rotation (11) a un axe de rotation Y-Y sensiblement parallèle à l'axe longitudinal X-X dudit amortisseur rotatif (1).

16. Système d'amortissement (100) selon l'une quelconque des revendications précédentes, **caractérisé en ce que** au moins une surface de butée (13b, 13c) est sensiblement parallèle à l'axe longitudinal X-X dudit amortisseur rotatif (1).

17. Système d'amortissement (100) selon l'une quelconque des revendications précédentes, **caractérisé en ce qu'**au moins une surface de butée (13b, 13c) est concave.

18. Système d'amortissement (100) selon la revendication 17, **caractérisé en ce qu'**au moins une surface de butée (13b, 13c) comprend au moins un secteur de surface cylindrique (14) excentré par rapport audit axe de rotation Y-Y dudit corps en rotation (11).

19. Système d'amortissement (100) selon l'une quelconque des revendications précédentes, comprenant des moyens élastiques (16) appropriés pour maintenir ledit amortisseur rotatif (1) dans ledit siège (10).

20. Articulation (200) comprenant un élément mobile (212) et un élément fixe (211) reliés par un système cinématique (202) comprenant au moins un corps en rotation (11), **caractérisée en ce qu'**il comprend un système d'amortissement (100) selon l'une quelconque des revendications précédentes prévu pour interagir en fonctionnement avec ledit au moins un corps en rotation (11).

21. Articulation (200) selon la revendication 20, **caractérisée en ce que** ledit système cinématique (202) comprend un quadrilatère articulé (203) et ledit corps en rotation (11) est au moins partiellement délimité par une extrémité articulée (215) d'une tige de liaison (204) dudit quadrilatère articulé (203) audit élément fixe (211).

22. Meuble comprenant une articulation (200) selon la revendication 20 ou 21.
